# EUROPEAN PATENT SPECIFICATION

(11) **EP 0 830 964 B1**
(45) Date of publication and mention of the grant of the patent: **12.01.2000**
(21) Application number: 97113531.4
(22) Date of filing: 06.08.1997
(51) Int. Cl.: B60J 1/10, B60R 1/06

(54) **A system for covering part of a motorcar vehicle door**
Abdeckeinrichtung für einen Teil einer Kraftfahrzeugtür
Système pour couvrir une partie d'une porte de véhicule à moteur

(30) Priority: 19.09.1996 IT TO960760
(43) Date of publication of application: 25.03.1998
(73) Proprietor: FIAT AUTO S.p.A., 10135 Torino (IT)
(72) Inventor: Bertinotti, Simone, 10050 Coazze (Torino) (IT)
(74) Representative: Di Francesco, Gianni

(56) References cited:
- EP-A- 0 369 799
- EP-A- 0 415 716
- EP-A- 0 526 327
- US-A- 4 936 537
- PATENT ABSTRACTS OF JAPAN vol. 011, no. 247 (M-615), 12 August 1987 & JP 62 055239 A (MAZDA MOTOR CORP), 10 March 1987,

## Description

The present invention relates to a system for covering the structure for supporting the wing mirror and guiding the movable glass of the front window of a motorcar, particularly of the space-wagon type, which have considerably large doors.

Owing to the shape of the window, which forms an acute angle corner at its leading part, the movable window glass of the front doors of the vehicle needs a front guiding part to be provided between the lower part of the door and the window frame. Such a guiding part is necessarily obtained eliminating the apex of said corner. Therefore, the construction of the door usually forms, at this location, a sheet metal triangle fitted onto the remainder of the door structure or integral therewith. The sheet metal is then covered, both on the outside and the inside, by a finishing coverage element usually of plastic material.

For the sake of easy assembling and utilisation, the wing mirror supporting body is normally fitted on said triangular element, on both the left and the right side.

With motorcars of considerable size, particularly those where the position of the seats is usually more advanced with respect to the edge of the front doors, and also with motorcars having a more acute angle at the leading corner of the window, the above cited guiding triangular element is rather wide and can take away part of the driver's visual angle (see JP-A-62055239).

It is an object of the present invention to provide a system for covering the element for guiding the leading window glass and supporting a wing mirror support of a motorcar front door, that, although being functional, does not reduce the driver's visual angle.

It is a further object of the present invention to provide such a covering system being aesthetically appreciable and being perfectly integrated with the outer shape of the vehicle.

In accordance with of the invention, these objects are accomplished by the provision of a covering system as claimed in claim 1.

In order that the present invention may be well understood there will now be described a preferred embodiment thereof, given by way of example, reference being made to the accompanying drawings, in which:

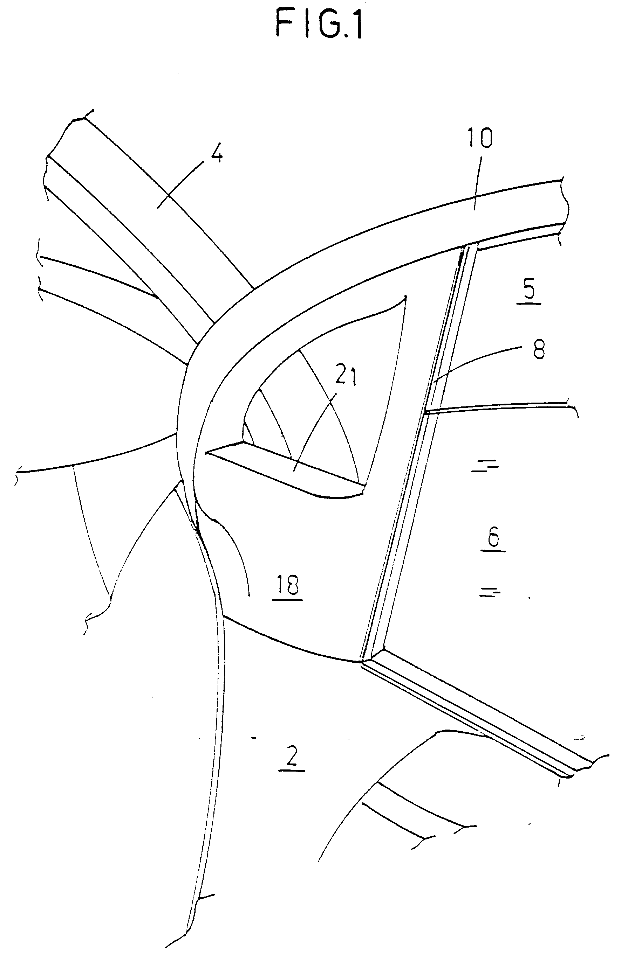

- FIG. 1 is: a perspective view of a system according to the invention for covering the window glass guide and the wing mirror support, as seen from the inner side of the motorcar door;

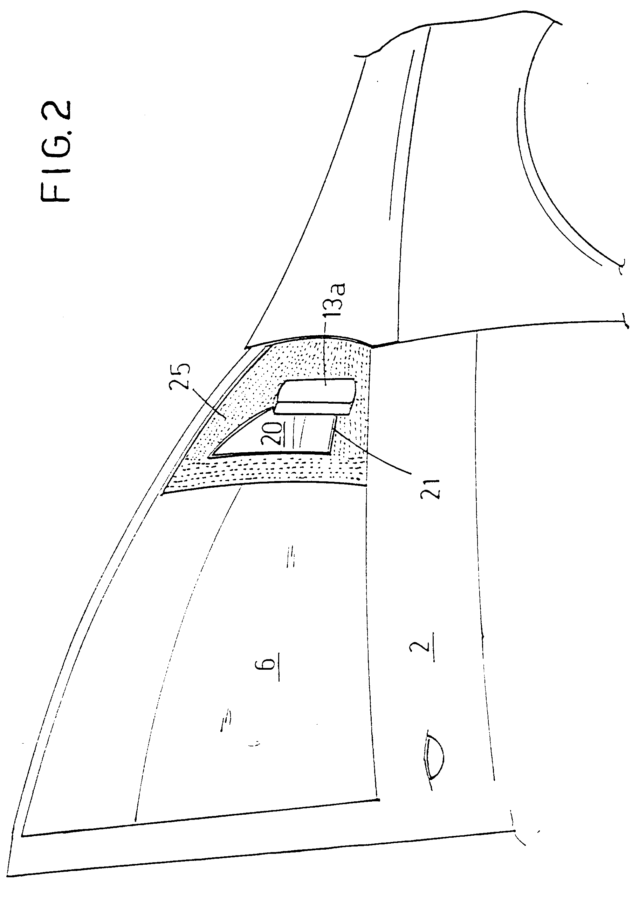

- FIG. 2 is: a view from the outside of a door fitted with the covering system of FIG. 1; and

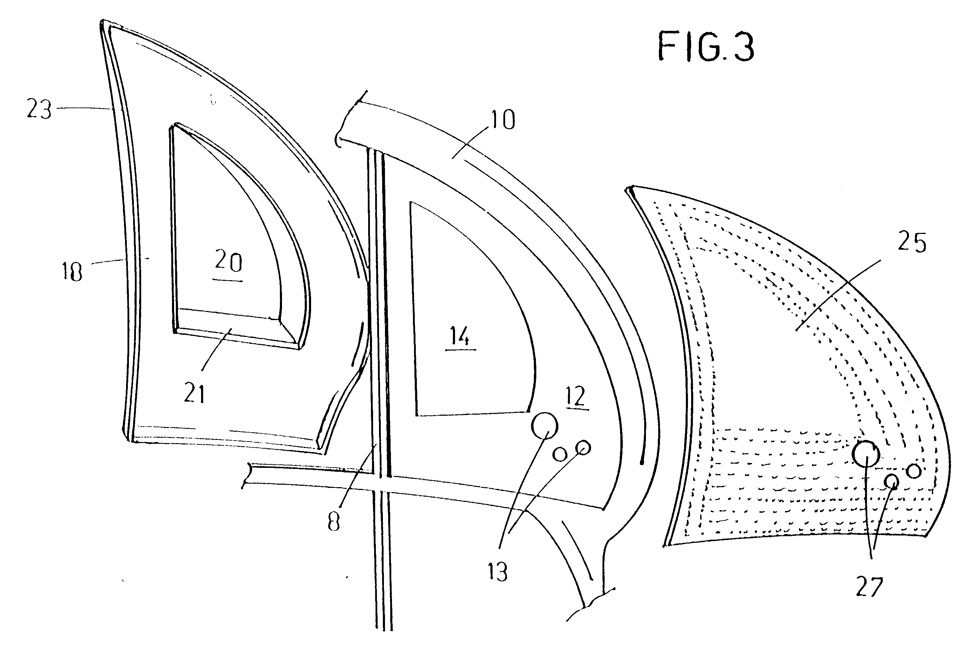

- FIG. 3 is: an exploded View of the components of the system of this invention.

With reference to the drawings, numeral 2 designates the door of a motorcar, hinged to the vehicle body 4. The door has a window 6 with a movable window glass 6. The leading part of the window glass is guided in a guide 8 integral with the door frame 10 so as to slide correctly and not to undergo unpleasant vibrations in running. The door frame 10 provides in the leading corner of the window 5 a sheet metal portion 12 of substantially triangular shape in which bores 13 are formed for providing attachment to the wing mirror 13a. An empty space 14 is formed within said triangular portion 12, that allows to see through it. The empty space 14 is also of substantially triangular shape, its outer contour following the outer contour of the frame.

An inner covering opaque element 18, of substantially rigid material, preferably of plastic material, forms a small window 20 the shape of which copies that of the empty space 14 and is provided with a protruding edge 21. Such a covering element has a concave shape. Its outer edge 23 is adapted to rest against the door frame 10 so as to hide it completely in the part of the triangular portion 12, whilst the protruding edge 21 fits within the empty space 14 hiding the edge of the sheet metal.

The coverage element is kept in position by known fastening means such as Allen screws or pin joints (not shown).

From the outside of the door, the sheet metal triangular portion 12 is hidden by a transparent element 25, preferably of metacrilate, or in any other known material having similar features. The transparent element 25 is provided with holes 27 for letting through the attachment means of wing mirror 13a.

Said transparent element is shaped in such manner as to follow the outer contour of the door and attain a satisfactory aesthetic result. The transparent element is fixed to the door frame 10 preferably by gluing, although other suitable fastening devices may be used.

The part of the transparent element 25 not coinciding with the empty space 14 and the small window 20 is covered with a thick pitting made by a silk-screen process, so as to mask that part of the door frame that would otherwise be visible from the outside.

In this manner, an aesthetically appreciable coverage is provided, while being also easy to mount and of low manufacturing costs.

## Claims

1. A system for covering the element for guiding the leading window glass and supporting a wing mirror support of considerable size of a motorcar front door, said guiding and supporting element consisting of a sheet metal portion of substantially triangular shape integral with the door frame, located in the leading corner of the window opening and providing an inner empty space (14) of substantially triangular shape, said guiding and supporting element being further provided with holes for attaching said wing mirror, characterised by comprising two covering elements: an inner opaque element (18) and an outer transparent element (25), both made of plastic material.

2. A covering system as claimed in claim 1, characterised in that said inner covering (18) provides a small window (20) the shape of which copies that of said empty space (14), said small window being provided with a protruding edge (21).

3. A covering system as claimed in claim 1, characterised in that parts of said outer transparent covering element (25) are obscured with a thick pitting made by a silk-screen process.

4. A covering system as claimed in claim 1, characterised in that said outer transparent covering element (25) is made of polycarbonate.

5. A covering system as claimed in claim 1, characterised in that the outer contour of said outer transparent covering element (25) follows the contour of the vehicle door.

## Patentansprüche

1. Abdeckeinrichtung für das Element zum Führen des vorderen Fensterglases und zum Stützen einer Seitenspiegelstütze von beträchtlicher Größe einer Autovordertür, wobei das Führungs- und Stützelement aus einem im wesentlichen dreieckigen Blechabschnitt besteht, der einstückig mit dem Türrahmen verbunden ist und der in der vorderen Ecke der Fensteröffnung angeordnet ist und einen innenliegenden leeren, im wesentlichen dreieckigen Raum (14) bietet, wobei das Führungs- und Stützelement des weiteren mit Löchern zum Befestigen des Seitenspiegels versehen ist,
dadurch gekennzeichnet,
daß die Einrichtung zwei Abdeckelemente umfaßt: ein inneres undurchsichtiges Element (18) und ein äußeres durchsichtiges Element (25), die beide aus Kunststoff gefertigt sind.

2. Abdeckeinrichtung nach Anspruch 1,
dadurch gekennzeichnet,
daß die innere Abdeckung (18) ein kleines Fenster (20) bietet, dessen Form der Form des leeren Raumes (14) entspricht, wobei das kleine Fenster mit einem vorstehenden Rand (21) ausgestattet ist.

3. Abdeckeinrichtung nach Anspruch 1,
dadurch gekennzeichnet,
daß Teile des äußeren durchsichtigen Abdeckelements (25) mit einem dicken Pitting verdunkelt sind, das durch Siebdruck hergestellt ist.

4. Abdeckeinrichtung nach Anspruch 1,
dadurch gekennzeichnet,
daß das äußere durchsichtige Abdeckelement (25) aus Polycarbonat hergestellt ist.

5. Abdeckeinrichtung nach Anspruch 1,
dadurch gekennzeichnet,
daß der äußere Umriß des äußeren durchsichtigen Abdeckelements (25) dem Umriß der Fahrzeugtür folgt.

## Revendications

1. Système pour recouvrir l'élément servant à guider la vitre avant et pour supporter un support de rétroviseur d'aile d'une dimension considérable d'une portière avant d'un véhicule à moteur, ledit élément de guidage et de support étant constitué d'une partie en feuille métallique de forme sensiblement triangulaire, solidaire du châssis de portière, placée dans le coin avant de l'ouverture de la vitre et procurant un espace interne vide (14) de forme sensiblement triangulaire, ledit élément de guidage et de support étant en outre prévu avec des trous pour fixer ledit rétroviseur d'aile, caractérisé en ce qu'il comprend deux éléments de recouvrement : un élément interne opaque (18) et un élément externe transparent (25), ces deux éléments étant constitués de matière plastique.

2. Système de recouvrement selon la revendication 1, caractérisé en ce que l'élément de recouvrement interne (18) procure une fenêtre de petite dimension (20) dont la forme copie celle dudit espace vide (14), ladite fenêtre de petite dimension étant munie d'un bord dépassant (21).

3. Système de recouvrement selon la revendication 1, caractérisé en ce que des parties dudit élément de recouvrement externe transparent (25) sont obscurcies avec un criblage noir épais réalisé par un procédé de sérigraphie.

4. Système de recouvrement selon la revendication 1, caractérisé en ce que ledit élément de recouvrement externe transparent (25) est constitué de polycarbonate.

5. Système de recouvrement selon la revendication 1, caractérisé en ce que le contour externe dudit élément de recouvrement externe transparent (25) suit le contour de la portière du véhicule.
